# EUROPÄISCHE PATENTANMELDUNG

(11) **EP 1 291 261 A2**
(43) Veröffentlichungstag der Anmeldung: **12.03.2003**
(21) Anmeldenummer: 02019834.7
(22) Anmeldetag: 06.09.2002
(51) Int. Cl.: B62D 3/12

(54) **Lenkgetriebe**

(30) Priorität: 06.09.2001 DE 20114759 U
(71) Anmelder: TRW Fahrwerksysteme GmbH & Co. KG, 40547 Düsseldorf (DE)
(72) Erfinder: Op den Camp, Eckhart, 56073 Koblenz (DE)
(74) Vertreter: Sties, Jochen, Dipl.-Ing.

(57) **Zusammenfassung**

Lenkgetriebe mit einem Gehäuse (10), einer in dem Gehäuse verschiebbaren Zahnstange (12), einem Antriebsritzel (14) und einem Druckstück (16), das die Zahnstange gegen das Antriebsritzel beaufschlagt, dadurch gekennzeichnet, daß ein Ausgleichsglied (18) vorgesehen ist, das sich mit einer Kurvenfläche an dem Druckstück abstützt, und daß eine Drehfeder (20) vorgesehen ist, die das Ausgleichsglied mit einem Drehmoment in einer solchen Richtung beaufschlagt, daß das Druckstück vom Ausgleichsglied hin zum Antriebsritzel gedrückt wird.

## Beschreibung

Die Erfindung betrifft ein Lenkgetriebe mit einem Gehäuse, einer in dem Gehäuse verschiebbaren Zahnstange, einem Antriebsritzel und einem Druckstück, das die Zahnstange gegen das Antriebsritzel beaufschlagt.

Gattungsgemäße Lenkgetriebe dienen dazu, vom Fahrzeuglenker ausgeführte Bewegungen des Lenkrads in eine Veränderung der Stellung von Rädern, die in der Regel auf einer Achse sitzen, umzusetzen. In Lenkgetrieben nach dem Stand der Technik wird die Drehbewegung des Lenkrads in eine Drehbewegung eines in einem Gehäuse des Lenkgetriebes untergebrachten Antriebsritzels umgesetzt. Das Antriebsritzel wirkt auf eine verschiebbare Zahnstange des Lenkgetriebes, diese wiederum über ein Gestänge auf die zu lenkenden Räder. Die im Gehäuse befindliche, verschiebbare Zahnstange wird von einem Druckstück so beaufschlagt, daß sie gegen ein Antriebsritzel gedrückt wird. Der Druck, den das Druckstück auf die Zahnstange ausübt, ist dabei so bemessen, daß eine optimale Verbindung zwischen Zahnstange und Antriebsritzel vorliegt und damit eine leichtgängige, feinfühlig ansprechende Lenkung realisiert werden kann. Auf das Druckstück wirkt dabei in der Regel eine Feder, welche das Druckstück mit einer definierten Vorspannung gegen den Rücken der Zahnstange preßt. Da es im Laufe des Betriebs sowohl zwischen Antriebsritzel und Zahnstange einerseits als auch zwischen Zahnstange und Druckstück andererseits zu Verschleißerscheinungen kommt, wird bei Lenkgetrieben nach dem Stand der Technik die zunächst gute Kraftübertragung zwischen Zahnstange und Antriebsritzel im Laufe der Zeit immer schlechter. Es ist deshalb erforderlich, das Lenkgetriebe zeitweise nachzujustieren. Diese Arbeiten sind mit einem hohen Aufwand verbunden und deshalb teuer.

Aufgabe der Erfindung ist es, das gattungsgemäße Lenkgetriebe derart zu verbessern, daß in allen Betriebszuständen eine Leichtgängigkeit und eine gute Kraftübertragung erreicht werden und der Wartungsaufwand auch nach längerer Betriebszeit minimiert wird.

Gemäß der Erfindung sind beim Lenkgetriebe der eingangs genannten Art ein Ausgleichsglied, das sich mit einer Kurvenfläche an dem Druckstück abstützt, und eine Drehfeder vorgesehen, die das Ausgleichsglied mit einem Drehmoment in einer solchen Richtung beaufschlagt, daß das Druckstück vom Ausgleichsglied hin zum Antriebsritzel gedrückt wird. Dadurch wird erreicht, daß das Ausgleichsglied die Zahnstange über das Druckstück in selbstnachstellender Weise bei zunehmendem Verschleiß des Getriebes gegen das Antriebsritzel drückt. Diese Bauweise des Getriebes vereinfacht zum einen die Montage am Band, da bestimmte Einzeljustierschritte nicht mehr durchgeführt werden müssen. Zum anderen können Toleranzen von Bauteilen kompensiert werden, wodurch diese mit geringerer Fertigungsgenauigkeit hergestellt werden können. Besonders vorteilhaft ist, daß auch während des Betriebs des Fahrzeugs beim Verschleiß des Lenkgetriebes keine Service- oder Reparaturarbeiten mehr durchgeführt werden müssen.

Gemäß einer bevorzugten Ausführungsform der Erfindung ist vorgesehen, daß die Kurvenfläche des Ausgleichsglieds Steigungskurvenflächen nach Art von Schraubenflächen aufweist und daß sich zwei der Steigungskurvenflächen über einen Winkel von jeweils 180° erstrecken. Es wird so eine besonders vorteilhafte Ausführung geschaffen, welche eine symmetrische Einleitung der Kräfte vom Ausgleichsstück auf das Druckstück ermöglicht.

Weitere vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in den beigefügten Zeichnungen dargestellt ist. In den Zeichnungen zeigen:
- Figur 1 eine Draufsicht auf das Lenkgetriebe mit teilweise weggebrochenem Gehäuse,
- Figur 2 eine partielle Schnittansicht des Lenkgetriebes gemäß der Erfindung entlang des Schnitts II-II der Figur 1; und
- Figur 3 eine Detailansicht des Ausgleichsglieds des Lenkgetriebes.

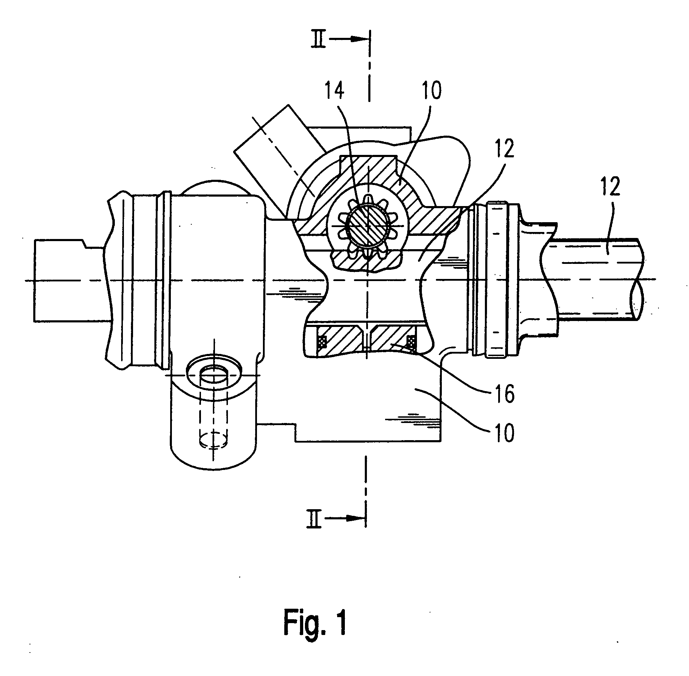

Figur 1 ist eine Draufsicht auf das erfindungsgemäße Lenkgetriebe. In einem Gehäuse 10 befindet sich eine in dem Gehäuse verschiebbare Zahnstange 12, die mit einer (nicht dargestellten) Radachse in Verbindung steht, ein Antriebsritzel 14, das über eine (nicht dargestellte) Lenkwelle mit einem (nicht dargestellten) Lenkrad in Verbindung steht, und ein Druckstück 16, das die Zahnstange gegen das Antriebsritzel preßt.

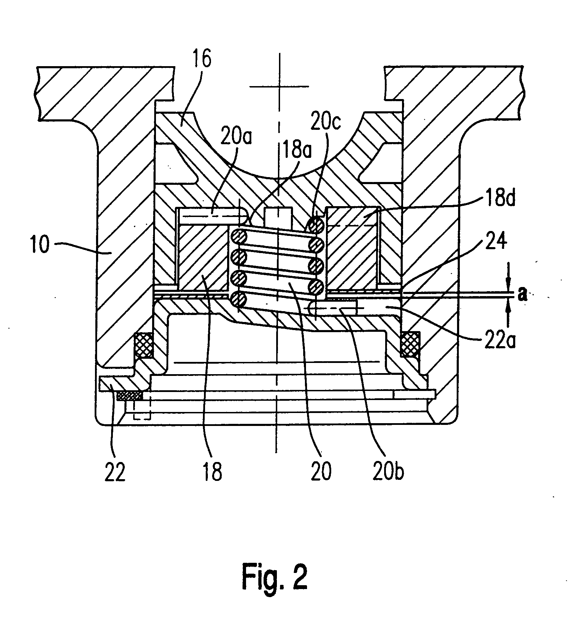

In Figur 2 ist in einer vergrößerten Detailansicht das Druckstück des Lenkgetriebes zu sehen. An dem Druckstück 16 stützt sich ein Ausgleichsglied 18 ab. Eine als Schenkelfeder ausgeführte Drehfeder 20 liegt mit einem ersten Schenkel 20a an einem sich radial erstreckenden Absatz 18a des Ausgleichsglieds 18 an, wodurch die Lage des ersten Federschenkels 20a besonders sicher festgelegt wird. Ein zweiter Schenkel 20b der Drehfeder 20 stützt sich an einer Abstützscheibe 22 ab. Die Abstützscheibe ist mit einer Scheibennut 22a versehen, in welcher der zweite Schenkel 20b aufgenommen ist, wodurch eine sichere Fixierung der Drehfeder 20 erreicht wird. Die Schenkelfeder verfügt über mehrere Windungen 20c. Zwischen der flachen Unterseite des Ausgleichsglieds 18 und der Abstützscheibe 22 befindet sich eine Wellscheibe 24, die federnd ausgeführt ist (Federweg a). Damit können fertigungsbedingte Abweichungen in der Verzahnung von Antriebsritzel 14 und Zahnstange 12 ausgeglichen und so ein Verklemmen bei einer Längsbewegung der Zahnstange vermieden werden. Ein typischer Wert für den Federweg a beträgt 0,1 bis 0,2 mm.

Die Drehfeder 20 beaufschlagt das Ausgleichsglied 18 über die vom ersten Schenkel 20a auf den Absatz 18a wirkende Kraft so mit einem Drehmoment, daß das Ausgleichsglied gegen das Druckstück gepreßt wird. Die Windungen 20c lassen die Drehfeder 20 in einer zweiten Funktion als Druckfeder wirken. Dies ist besonders vorteilhaft, da die Drehfeder 20 das Druckstück 16 auch axial gegen das Antriebsritzel drückt.

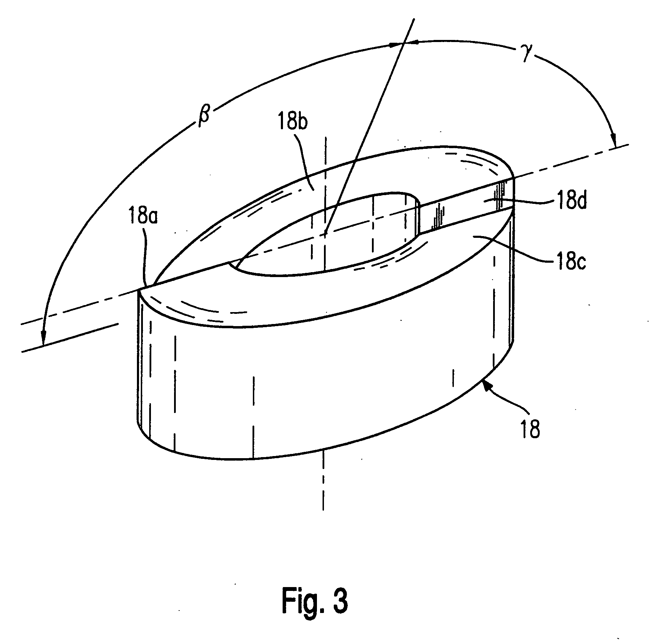

In Figur 3 ist in einer Detailansicht eine bevorzugte Ausführungsform des Ausgleichsstücks 18 in ringförmiger Gestaltung dargestellt. Steigungskurvenflächen 18b, 18c des Ausgleichsglieds 18 sind in der Art von Schraubenflächen ausgeführt und erstrecken sich über einen Winkel von jeweils 180°. Die Absätze 18a, 18d trennen die Steigungskurvenfläche 18b von der Steigungskurvenfläche 18c. Bei dem hier gezeigten ringförmigen Ausgleichsglied 18 ist die Drehfeder im Innern angeordnet (siehe Figur 2), was eine besonders kompakte und platzsparende Bauweise erlaubt. In der hier gezeigten bevorzugten Ausführungsform ist der Steigungswinkel der Steigungskurvenflächen 18b, 18c mit 6° sehr gering. Die Reibungskräfte zwischen dem Ausgleichsglied 18 und dem Druckstück 16 sind damit so groß, daß das von der Zahnstange mit Kraft beaufschlagte Druckstück nicht mehr nach bezüglich Figur 2 unten ausweichen kann. Der Durchmesser des Ausgleichsglieds 18 wird mit ca. 20 mm so gewählt, daß der Hub der Steigungskurvenflächen 18b, 18c über einen Winkelbereich β etwa 3 mm beträgt, wobei der Winkelbereich β den Nachstellbereich für das Ausgleichsstück 18 bildet. Ein zweiter Winkelbereich γ=180°-β legt die Mindestkontaktfläche zwischen der Steigungskurvenfläche 18b bzw. 18c einerseits und der dieser gegenüberliegenden Fläche des Druckstücks 16 andererseits fest, die erforderlich ist, um einen sicheren und druckminimierten Kontakt zwischen Druckstück 16 und Ausgleichsglied 18 zu erreichen.

## Patentansprüche

1. Lenkgetriebe mit einem Gehäuse (10), einer in dem Gehäuse verschiebbaren Zahnstange (12), einem Antriebsritzel (14) und einem Druckstück (16), das die Zahnstange gegen das Antriebsritzel beaufschlagt,
**dadurch gekennzeichnet, daß** ein Ausgleichsglied (18) vorgesehen ist, das sich mit einer Kurvenfläche an dem Druckstück abstützt, und daß eine Drehfeder (20) vorgesehen ist, die das Ausgleichsglied mit einem Drehmoment in einer solchen Richtung beaufschlagt, daß das Druckstück vom Ausgleichsglied hin zum Antriebsritzel gedrückt wird.

2. Lenkgetriebe nach Anspruch 1, **dadurch gekennzeichnet, daß** die Kurvenfläche Steigungskurvenflächen (18b, 18c) nach Art von Schraubenflächen aufweist.

3. Lenkgetriebe nach Anspruch 2, **dadurch gekennzeichnet, daß** sich die Steigungskurvenflächen (18b, 18c) über einen Winkel von jeweils 180° erstrecken.

4. Lenkgetriebe nach einem der vorhergehenden Ansprüche, **dadurch gekennzeichnet, daß** die Steigung der Steigungskurvenflächen (18b, 18c) so gering ist, daß eine Selbsthemmung gegenüber dem Druckstück (16) entsteht.

5. Lenkgetriebe nach einem der vorhergehenden Ansprüche, **dadurch gekennzeichnet, daß** die Steigung der Steigungskurvenflächen (18b, 18c) etwa 6° beträgt.

6. Lenkgetriebe nach einem der vorhergehenden Ansprüche, **dadurch gekennzeichnet, daß** der Durchmesser des Ausgleichglieds (18) so gewählt ist, daß der Hub jeder Steigungskurvenfläche (18b, 18c) in einem festgelegten Winkelbereich (β) etwa 3 mm beträgt.

7. Lenkgetriebe nach einem der vorhergehenden Ansprüche, **dadurch gekennzeichnet, daß** die Drehfeder (20) eine Schenkelfeder mit mehreren Windungen (20c) ist, so daß sie auch als Druckfeder wirkt, die das Druckstück (16) zum Antriebsritzel (14) hin beaufschlagt.

8. Lenkgetriebe nach Anspruch 7, **dadurch gekennzeichnet, daß** das Ausgleichsglied (18) mit einem sich radial erstreckenden Absatz (18a, 18d) versehen ist, an dem ein erster Schenkel (20a) der Schenkelfeder anliegt.

9. Lenkgetriebe nach einem der Ansprüche 7 oder 8, **dadurch gekennzeichnet, daß** eine Abstützscheibe (22) vorgesehen ist, an der sich die Schenkelfeder auf ihrer vom Druckstück (16) abgewandten Seite abstützt, wobei die Abstützscheibe mit einer Scheibennut (22a) versehen ist, in welcher der zweite Schenkel (20b) der Schenkelfeder aufgenommen ist.

10. Lenkgetriebe nach einem der vorhergehenden Ansprüche, **dadurch gekennzeichnet, daß** das Ausgleichsglied (18) ringförmig ausgebildet ist und die Drehfeder (20) im Inneren des Ausgleichsglieds angeordnet ist, wobei zwischen dem Ausgleichsglied und der Abstützscheibe (22) eine federnde Wellscheibe (24) angeordnet ist.
